# DEMANDE DE BREVET EUROPEEN

(11) **EP 0 989 658 A1**
(43) Date de publication de la demande: **29.03.2000**
(21) Numéro de dépôt: 98118291.8
(22) Date de dépôt: 28.09.1998
(51) Int. Cl.: H02K 9/19

(54) **Machine électrique asynchrone refroidie par liquide**

(71) Demandeur: The Swatch Group Management Services AG, 2501 Biel (CH)
(72) Inventeur: Zysset, Ernst, 2532 Macolin (CH)
(74) Mandataire: Balsters, Robert

(57) **Abrégé**

Afin d'assurer un refroidissement efficace et un équilibre des températures entre le stator et le rotor, il est prévu un moteur électrique asynchrone contenant un circuit fermé de liquide de refroidissement qui passe successivement dans le stator (1) et dans l'arbre (3) du rotor, sur toute la longueur du stator et du rotor. Une pompe (15) est incorporée dans l'arbre du rotor. Le liquide est injecté dans la pompe par un tube axial stationnaire (16) et en ressort entre l'arbre et ce tube. La pompe comporte un organe de pompage centrifuge (20) fixé au fond de l'alésage de l'arbre, et des pales longitudinales (21) fixées à l'arbre en regard d'une ailette hélicoïdale extérieure (17) du tube d'injection. Le liquide est refroidi par l'air ambiant le long du pourtour du stator.

## Description

La présente invention se rapporte à une machine électrique asynchrone, notamment un moteur asynchrone, comportant un rotor à l'intérieur d'un stator et contenant un circuit de refroidissement à liquide, le rotor ayant un arbre creux dans lequel est incorporée une pompe pour faire circuler le liquide.

L'invention s'applique en particulier à des moteurs asynchrones pour véhicules à traction électrique ou hybride, ces moteurs devant présenter une puissance massique élevée, un faible encombrement et le moins possible de raccords extérieurs, notamment pour le liquide de refroidissement.

Habituellement, dans les moteurs de ce genre, le liquide de refroidissement circule seulement dans le stator, puis il est conduit à un radiateur extérieur pour être refroidi par de l'air. Cette disposition crée des difficultés pour l'implantation du radiateur et des conduites de liaison. Par ailleurs, le rotor mal refroidi devient beaucoup plus chaud que le stator. D'une part, cette élévation de température oblige le constructeur a limiter le courant d'alimentation, donc la puissance du moteur, et d'autre part, la différence de température entre le rotor et stator entraîne des dilatations différentielles qui peuvent causer des dommages mécaniques, en particulier dans les paliers du moteur.

Dans la demande de brevet DE 4020416, il est décrit l'incorporation d'une pompe dans l'arbre d'une génératrice électrique entraînée par le moteur de traction d'un véhicule. Cette pompe comporte un corps central stationnaire à plusieurs canaux parallèles, ayant un tel encombrement qu'elle ne peut être logée que dans un arbre de diamètre particulièrement grand. Le circuit décrit refroidit l'arbre du rotor, mais pas le stator.

La présente invention a pour objet une machine électrique asynchrone, notamment un moteur ou une génératrice, dont le circuit de refroidissement à liquide est agencé de manière à éviter dans une mesure substantielle les inconvénients susmentionnés.

Dans ce but, une machine électrique asynchrone selon l'invention est caractérisée en ce que le circuit de liquide est un circuit fermé à l'intérieur de la machine et passe dans le stator et dans l'arbre du rotor, sensiblement sur toute la longueur du rotor et sur toute la longueur du stator.

On obtient ainsi un circuit de refroidissement complètement fermé à l'intérieur du moteur, n'exigeant ni pompe extérieure, ni raccordement à un radiateur extérieur. La circulation du liquide successivement à travers le stator et à travers le rotor garantit un bon équilibre des températures entre ces deux parties du moteur, donc moins de dilatations différentielles et moins d'élévations localisées de la température, en permettant donc une puissance massique plus grande et/ou une réduction du volume du moteur pour une même puissance.

De préférence, le circuit de liquide dans le stator passe dans une chambre de refroidissement où le liquide est en contact avec une enveloppe périphérique du stator, laquelle est pourvue d'ailettes extérieures, le circuit passant ensuite dans des conduits ménagés dans le bâti du stator.

Cela signifie que la chambre de refroidissement et l'enveloppe périphérique du stator forment un échangeur de chaleur eau-air, cette enveloppe étant généralement exposée à un fort courant d'air lorsqu'il d'un moteur pour véhicule automobile électrique, en particulier un moteur couplé individuellement à une roue du véhicule et situé dans le passage de roue.

D'autres caractéristiques et avantages de l'invention apparaîtront dans la description suivante d'une forme de réalisation préférée, présentée à titre d'exemple non limitatif et en référence aux dessins annexés, dans lesquels :
- la figure 1 est une vue schématique en coupe axiale d'un moteur asynchrone selon l'invention,
- la figure 2 représente à une échelle agrandie un détail de la figure de la figure 1, montrant une partie de la pompe incorporée à l'arbre du rotor, et
- les figures 3 et 4 sont deux vues en coupe schématique d'une partie de la pompe, suivant la ligne III-III de la figure 2.

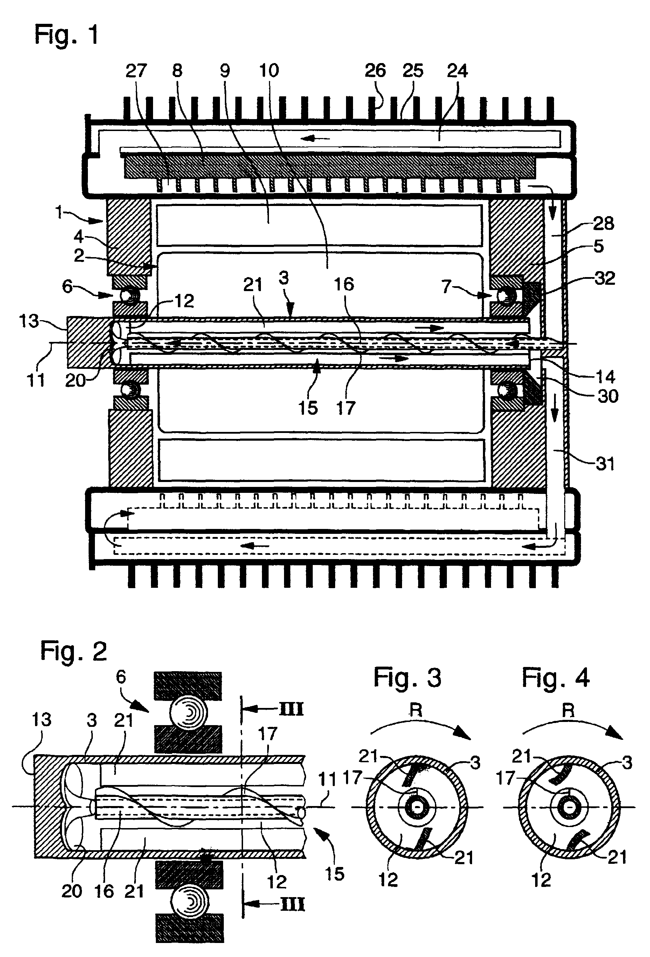

En référence aux figures 1 et 2, le moteur asynchrone représenté comporte un stator 1 et un rotor 2 ayant un arbre creux 3 qui est monté dans des flasques 4 et 5 du stator au moyen de paliers 6 et 7. On a désigné par 8 le bâti du stator, par 9 ses enroulements, par 10 l'induit du rotor et par 11 l'axe de rotation du rotor. L'alésage central 12 de l'arbre creux 3 est borgne, l'arbre étant fermé à son extrémité d'entraînement 13, tandis qu'il est ouvert à son extrémité opposée 14. L'alésage 12 s'étend au moins sur toute la longueur du l'induit 10, et de préférence sur toute la longueur de l'arbre 3 située à l'intérieur du moteur, c'est-à-dire aussi dans les zones des paliers 6 et 7.

Le moteur est refroidi grâce à un circuit fermé de refroidissement à liquide, par exemple à eau ou à huile, comprenant une pompe 15 située dans l'alésage 12 de l'arbre 3. La partie stationnaire de la pompe est formée essentiellement par un tube central d'injection 16 qui est fixé au flasque 5 du stator et débouche au voisinage du fond de l'alésage 12. Sur sa surface extérieure, ce tube est pourvu d'au moins une ailette hélicoïdale 17, qui de préférence s'étend sur toute la longueur du tube et présente une hauteur constante. Le tube et son ailette peuvent être en acier ou en toute autre matière appropriée.

La partie rotative de la pompe 15 comprend d'une part un organe de pompage centrifuge 20, disposé au fond de l'alésage 12 en regard du débouché du tube 16, et d'autre part deux ou plusieurs pales longitudinales 21 régulièrement espacées sur le pourtour de l'alésage 12 de l'arbre, en regard de l'ailette hélicoïdale 17. Il est prévu au minimum deux pales 21 pour des raisons d'équilibre, mais on peut en prévoir un nombre plus élevé. Le cas échéant, ces pales peuvent aussi avoir une forme hélicoïdale.

L'organe de pompage 20 sert de roue de pompe centrifuge. Il peut être formé soit par un relief approprié usiné au fond de l'alésage 12, soit par une roue de pompe fixée dans cet alésage. Cet organe 20 aspire le liquide à la sortie du tube 16 et le refoule entre ce tube et l'arbre creux 3, assurant ainsi une pression de base et un bon échange thermique entre le liquide et l'arbre. Ensuite, la partie axiale de la pompe, comprenant les pales 21 et l'ailette 17, produit une pression de pompage supplémentaire et les pales 21 forment des surfaces additionnelles d'échange thermique.

Afin de créer un débit suffisant aux faibles vitesses de rotation, le bord libre des pales 21 se trouve à une faible distance du bord libre de l'ailette hélicoïdale 17, comme le montre la figure 3. Ceci garantit un refroidissement efficace même lorsque le moteur tourne lentement.

Cependant, il peut en résulter que la pompe consomme trop de puissance lorsque le moteur tourne vite. Dans une forme de réalisation préférée, cet inconvénient est évité par le fait que les pales rotatives 21 sont déformables de façon que leur distance à l'ailette 17 soit variable, notamment par inclinaison ou flexion des pales 21. Cette situation est illustrée par la figure 4.

Un tel effet peut être obtenu de différentes manières. On peut simplement prévoir que les pales 21 soient déformables transversalement par flexion sous l'effet de la pression dynamique qu'elles exercent sur le liquide. De telles pales peuvent être par exemple insérées longitudinalement dans des rainures ménagées dans l'arbre 3. Dans ce cas, la figure 3 illustre la position des pales 21 à l'arrêt ou à faible vitesse (dans le sens de rotation indiqué par la flèche R), avec un débit de pompage relativement élevé pour une faible vitesse de rotation. Aux vitesses plus élevées, les pales 21 fléchissent comme l'indique la figure 4, de sorte que le débit, les pertes de charge hydraulique et la puissance mécanique consommée augmentent moins vite qu'avec des pales rigides.

La position des pales 21 selon la figure 3 produit un régime hydraulique turbulent qui accroît l'échange thermique entre le rotor et le liquide, spécialement aux basses vitesses où les courants rotoriques peuvent être particulièrement forts. Au contraire, la position selon la figure 4 permet un écoulement laminaire, donc une réduction des pertes hydrauliques aux vitesses élevées.

Une autre solution consiste dans des pales 21 déformables sous l'effet de la température, par exemple des pales faites de deux couches métalliques ayant des coefficients de dilatation thermique différents. Dans ce cas, la figure 3 représente la position à température élevée fournissant un débit relativement grand, et la figure 4 représente la position à basse température, qui consomme moins de puissance mécanique. Dans cette solution aussi, les pales 21 peuvent être flexibles de manière à limiter le débit aux vitesses élevées.

Dans le stator 1, le circuit de liquide de refroidissement comporte une chambre de refroidissement 24 sensiblement cylindrique, qui s'étend sur tout le pourtour et la longueur du stator, le long d'une enveloppe périphérique métallique 25, réalisée par exemple en fonte de métal léger ou en tôle, pourvue d'ailettes extérieures 26. L'enveloppe 25 constitue ainsi un radiateur refroidi par l'air ambiant. Le liquide circulant dans le sens des flèches parvient ensuite dans des conduits 27 du bâti 8 du stator, pour refroidir le bâti et les enroulements, puis il est ramené à l'intérieur du tube d'injection 16 en passant par des canaux radiaux 28 du flasque 5 opposé au côté de l'entraînement. Le liquide passant ensuite dans la pompe 15 refroidit l'arbre 3 et le rotor sur toute sa longueur. A la sortie de l'alésage 12 de l'arbre, il traverse une chambre annulaire 30 et des canaux radiaux 31 du flasque 5 pour retourner à la chambre de refroidissement 24. Un unique joint d'étanchéité 32 est nécessaire entre la chambre 30 et le palier 7. Les canaux 28 et 31 du flasque 5 peuvent être disposés de façon à favoriser une circulation du liquide par convection lorsque le moteur est à l'arrêt. Un homme du métier notera que ces canaux, ainsi que les conduits 27, sont réalisables par des techniques de fonderie et ne créent pas de problème d'étanchéité, puisqu'ils sont situés entièrement dans des parties fixes du moteur.

La description qui précède montre que l'invention permet de réaliser un moteur asynchrone (et aussi une génératrice le cas échéant) qui est autonome du point de vue de son refroidissement, puisqu'il n'exige ni pompe extérieure, ni radiateur extérieur, ni aucune conduite extérieure de fluide. Ceci permet une construction compacte et entièrement encapsulée, particulièrement appropriée à l'utilisation du moteur dans des milieux agressifs ou explosifs ou sur des véhicules automobiles. Dans cette dernière application, l'invention offre plus de liberté pour l'implantation des moteurs électriques et permet en particulier de se passer des circuits hydrauliques extérieurs au moteur, qui prennent de la place, causent des pertes de charge et exigent, à cause des mouvements du moteur, des conduites flexibles qui sont souvent sujettes à des ruptures.

La disposition de la pompe a l'intérieur de l'arbre du rotor produit une légère poussée axiale qui stabilise le rotor à toutes les vitesses et empêche ainsi l'apparition de vibrations dans les paliers. En outre, comme les différences de températures entre le rotor et le stator sont fortement réduites, on peut aussi réduire ou supprimer le jeu axial dans les paliers. Cela permet d'optimiser la construction de la machine électrique et d'allonger sa durée de service.

## Revendications

1. Machine électrique asynchrone, notamment moteur asynchrone, comportant un rotor (2) à l'intérieur d'un stator (1) et contenant un circuit de refroidissement à liquide, le rotor ayant un arbre creux (3) dans lequel est incorporée une pompe (15) pour faire ciculer le liquide,
caractérisée en ce que le circuit de liquide est un circuit fermé à l'intérieur de la machine et passe dans le stator (1) et dans l'arbre (3) du rotor (2), sensiblement sur toute la longueur du rotor et sur toute la longueur du stator.

2. Machine selon la revendication 1, caractérisée en ce que le circuit de liquide dans le stator passe dans une chambre de refroidissement (24) où le liquide est en contact avec une enveloppe périphérique (25) du stator, laquelle est pourvue d'ailettes extérieures (26), le circuit passant ensuite dans des conduits (27) ménagés dans le bâti du stator.

3. Machine selon la revendication 1 ou 2, caractérisée en ce que l'arbre (3) du rotor comporte un alésage central (12) qui est fermé du côté de l'entraînement de l'arbre et ouvert du côté opposé, et en ce que le circuit de liquide comporte un tube stationnaire d'injection (16) s'étendant axialement dans ledit alésage et débouchant au voisinage du fond de l'alésage.

4. Machine selon la revendication 3, caractérisée en ce que la pompe (15) comporte un organe de pompage centrifuge (20) disposé au fond de l'alésage (12) de l'arbre du rotor.

5. Machine selon la revendication 3 ou 4, caractérisée en ce que le tube d'injection (16) est pourvu d'au moins une ailette extérieure hélicoïdale (17).

6. Machine selon la revendication 5, caractérisée en ce qu'au moins deux pales rotatives (21) longitudinales ou hélicoïdales sont fixées à l'arbre dans ledit alésage, de façon à pouvoir tourner autour de l'ailette hélicoïdale (17) du tube d'injection.

7. Machine selon la revendication 6, caractérisée en ce que les pales rotatives (21) sont déformables, de sorte que leur distance à l'ailette hélicoïdale est variable.

8. Machine selon la revendication 7, caractérisée en ce que les pales rotatives (21) sont déformables sous l'effet de la pression dynamique qu'elles exercent sur le liquide.

9. Machine selon la revendication 7, caractérisée en ce que les pales rotatives (21) sont déformables sous l'effet de la température.

10. Machine selon les revendications 2 et 3, caractérisée en ce que le stator est fermé, du côté opposé à l'entraînement, par un flasque (5) contenant des premiers canaux (31) qui relient la sortie de l'alésage (12) de l'arbre à la chambre de refroidissement (24), et des seconds canaux (28) qui relient les conduits (27) du bâti du stator au tube d'injection (16), ce tube étant fixé au flasque.
